(19) Europäisches Patentamt
European Patent Office
Office européen des brevets

(11) **EP 2 387 277 B1**

(12) **EUROPEAN PATENT SPECIFICATION**

(45) Date of publication and mention
of the grant of the patent:
**19.12.2012 Bulletin 2012/51**

(51) Int Cl.:
*H04W 52/24* ^(2009.01)    *H04W 52/26* ^(2009.01)

(21) Application number: **09839510.6**

(22) Date of filing: **03.02.2009**

(86) International application number:
**PCT/CN2009/070341**

(87) International publication number:
**WO 2010/088793 (12.08.2010 Gazette 2010/32)**

(54) **METHOD FOR REPORTING POWER OFFSET, METHOD FOR SENDING MODULATION SIGNAL, MOBILE TERMINAL AND BASE STATION**

VERFAHREN ZUM MELDEN EINES LEISTUNGSOFFSET, VERFAHREN ZUM SENDEN EINES MODULATIONSSIGNALS, MOBILES ENDGERÄT UND BASISSTATION

PROCÉDÉ DE RAPPORT DE DÉCALAGE DE PUISSANCE, PROCÉDÉ D'ENVOI DE SIGNAL DE MODULATION, TERMINAL MOBILE ET STATION DE BASE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**16.11.2011 Bulletin 2011/46**

(73) Proprietor: **Huawei Technologies Co., Ltd. Longgang District, Shenzhen Guangdong 518129 (CN)**

(72) Inventors:
• **DONG, Pengpeng**
  **Guangdong 518129 (CN)**
• **XIAO, Jiehua**
  **Guangdong 518129 (CN)**

(74) Representative: **Thun, Clemens Mitscherlich & Partner Patent- und Rechtsanwälte Sonnenstrasse 33 80331 München (DE)**

(56) References cited:
**CN-A- 1 610 273    CN-A- 1 790 939
CN-A- 1 983 852**

• **"3rd Generation Partnership Project; Technical Specification Group GERAN; Circuit Switched Voice Capacity Evolution for GSM/EDGE Radio Access Network (GERAN) (Release 8)", 3GPP STANDARD; 3GPP TR 45.914, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 February 2009 (2009-02-01), pages 1-208, XP050379319,**
• **TELEFON AB LM ERICSSON: "Adaptive Symbol Constellation - Proposed text for MUROS TR", 3GPP DRAFT; GP-081129 - ADAPTIVE SYMBOL CONSTELLATION - PROPOSED TEXT FOR MUROS TR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Florence; 20080825, 20 August 2008 (2008-08-20), XP050413549, [retrieved on 2008-08-20]**
• **ROHANI B ET AL: "Combined AMR Mode Adaptation and Fast Power Control for GSM Phase 2+", COMMUNICATIONS, 2005 ASIA-PACIFIC CONFERENCE ON PERTH, WESTERN AUSTRALIA 03-05 OCT. 2005, PISCATAWAY, NJ, USA,IEEE, 3 October 2005 (2005-10-03), pages 411-415, XP010860813, DOI: 10.1109/APCC. 2005.1554091 ISBN: 978-0-7803-9132-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 387 277 B1

• HUAWEI TECHNOLOGIES CO ET AL: "Discussions on SCPIR Selection for alpha-QPSK", 3GPP DRAFT; GP-090087 DISCUSSIONS ON SCPIR SELECTION FOR ALPHA-QPSK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Malta; 20090216, 11 February 2009 (2009-02-11), XP050414429, [retrieved on 2009-02-11]

**Description**

**FIELD OF THE INVENTION**

The present invention relates to communications technologies, and in particular, to a method for reporting a power offset, a method for sending a modulated signal, a Mobile Station (MS), and a Base Station (BS).

**BACKGROUND OF THE INVENTION**

In the existing radio communication field, the MUROS Multi-User Reuse One Slot) technology provides two subchannels so that two MSs (Mobile Station) can work on the same radio resource. Each MS occupies a subchannel, and subchannels are distinguished through an orthogonal or quasi-orthogonal training sequence. In the process of communication between the BS and the MS, in the downlink direction, the BS sends $\alpha$-QPSK (Quaternary Phase Shift Keying) signals to the MSs, and two MSs use the mutually orthogonal training sequence and enhanced interference cancellation technology to cancel undesired signals as interference signals, and leave desired signals. In the uplink direction, the two MSs uses GMSK (Gaussian Minimum Shift Keying) to modulate signals and send signals at the same time or frequency. The BS demodulates two channels of multiplexed signals through SIC (Successive Interference Cancellation) or JD (Joint Detection), and distinguishes between the two UEs through different TSCs (Training Sequence Codes).

The BS receives a measurement report sent by the MS in the uplink direction. The measurement report includes RXQUAL(receiving quality) and RXLEV (receiving level). The BS determines the power offset according to the RXQUAL and/or RXLEV. Power offset refers to SCPIR (Sub Channel Power Imbalance Ratio) sent by a BTS (Base Transmitter Station). The $\alpha$ value is calculated according to the power offset, where $\alpha$ is a modulation mapping parameter. The BS modulates the transmitted signals through the a value. Similarly, in 3GPP TR 45.914, V8.0.0, 1 February 2009 (2009-02-01) is disclosed that the base station calculates the modulation mapping parameter according to a power offset, that is determined by the base station based on a measurement report, including RXQUAL and RXLEV, received from the mobile station. In "combined AMR mode adaptation and fast power control for GSM phase 2+" disclosed by Rohani et al. on 3 October 2005, it records that the receiving end estimates the received C/I by using demodulated training sequence in every received TDMA burst, and these estimates are subsequently used for generation of CMC/CMR message that are transmitted inband together with enclosed speech. The control unit at the transmitting end applies the received CMC/CMR message for power and AMR rate control. In the process of researching the prior art, the inventor finds that: In the prior art, the RXQUAL values reported by the MS are discrete values of low precision; the RXQUAL values reported by the MSs of different demodulation capabilities may belong to the same precision range, and may be equal. Consequently, the power offset calculated by the BS according to the RXQUAL is not accurate, and the $\alpha$ value is not precise.

**SUMMARY OF THE INVENTION**

The embodiments of present invention provide a method for reporting a power offset according to claim 1, a method for sending a modulated signal according to claim 6, an MS according to claim 8 and a BS according to claim 12 to solve the problem of inaccurate power offset obtained by the BS according to the measurement report of the MS.

The embodiments of the present invention are based on the following technical solution:

A method for reporting a power offset includes:

generating a mapping relation between a radio environment state parameter and a power offset according to a target demodulation performance parameter;
obtaining a current radio environment state parameter, and searching the mapping relation to obtain a power offset corresponding to the current radio environment state parameter;and
reporting the power offset to a BS.

A method for sending a modulated signal includes:

receiving maximum power offsets reported by MSs;
obtaining a modulation mapping parameter of paired MSs among the MSs reporting the maximum power offsets according to the maximum power offset;
modulating a signal according to the modulation mapping parameter to generate a modulated signal; and
sending the modulated signal to the paired MSs according to a total transmitted power.

An MS includes:

a generating unit (610, 730), and
a reporting unit(620,740), configured to report the power offset to a BS;
wherein the generating unit (610, 730) comprises:

a mapping relation generating unit (731), adapted to generate a mapping relation between a radio environment state parameter and a power offset according to a target demodulation performance parameter;
a parameter obtaining unit (732), configured to obtain a current radio environment state parameter; and
a power offset searching unit (733), configured to search the mapping relation to obtain a power offset corresponding to the current radio environment state parameter.

A BS includes:

a first receiving unit(810), configured to receive maximum power offsets reported by an MSs;
an obtaining unit(820), configured to obtain a modulation mapping parameter of paired MSs among the MSs reporting the maximum power offsets according to the maximum power offsets;
a modulating unit(830), configured to modulate a signal according to the modulation mapping parameter to generate a modulated signal;
a sending unit(840), configured to send the modulated signal to the paired MSs according to a total transmitted power.

In the technical solution provided herein, a power offset is generated according to the radio environment state parameter and demodulation performance parameter of the MS, and is reported to the BS. Because the power offset is obtained by the MS according to its own actual conditions and reported directly instead of being calculated by the BS according to the measurement report, the power offset used by the BS is more accurate.

## BRIEF DESCRIPTION OF THE DRAWINGS

FIG. 1 is a flowchart of a method for reporting a power offset in an embodiment of the present invention;
FIG. 2A(1) and FIG. 2A(2) are a flowchart of a method for reporting a power offset in another embodiment of the present invention;
FIG. 2B is a curve of a power offset set illustrated in FIG. 2A;
FIG. 3 is a flowchart of a method for sending a modulated signal in an embodiment of the present invention;
FIG. 4A and FIG. 4B are a flowchart of a method for sending a modulated signal in another embodiment of the present invention;
FIG. 5 shows a structure of communication between a BS and an MS in an embodiment of the present invention;
FIG. 6 is a block diagram of an MS in an embodiment of the present invention;
FIG. 7 is a block diagram of an MS in another embodiment of the present invention;
FIG. 8 is a block diagram of a BS in an embodiment of the present invention; and
FIG. 9 is a block diagram of a BS in another embodiment of the present invention.

## DETAILED DESCRIPTION OF THE EMBODIMENTS

The embodiments of the present invention provide a method for reporting a power offset, a method for sending a modulated signal, an MS and a BS. The MS generates a power offset according to a radio environment state parameter and a demodulation performance parameter of the MS and reports the power offset to the BS. The BS receives a maximum power offset reported by the MS, obtains the modulation mapping parameter of paired MSs according to the maximum power offset, modulates signals according to the modulation mapping parameter to generate a modulated signal, and sends the modulated signal to the paired MSs according to a total transmitted power.
To make the objectives, features and merits of the technical solution of the present invention clearer, the following describes the embodiments of the present invention in more detail with reference to the accompanying drawings.

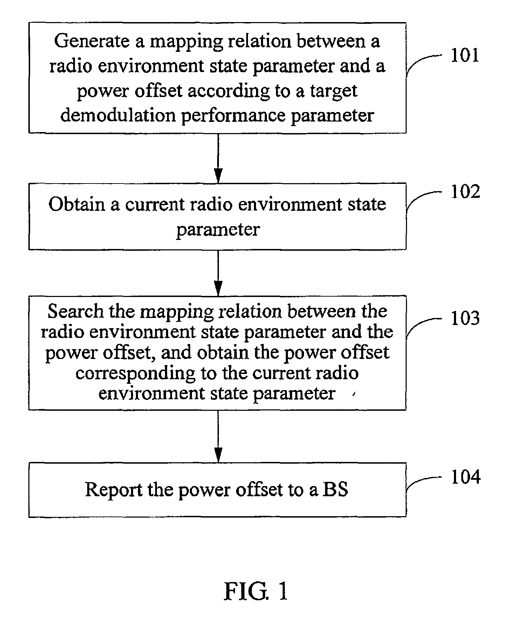

FIG. 1 is a flowchart of a method for reporting a power offset in an embodiment of the present invention. The method includes the following steps:

Step 101: Generate a mapping relation between a radio environment state parameter and a power offset according to a target demodulation performance parameter.

The radio environment state parameter in this embodiment may be a CIR (Carrier-to-Interference Ratio) or a Signal-to-Noise Ratio, and the demodulation performance parameter may be an FER (Frame Error Ratio) or a BER (Bit Error Rate). The target demodulation performance parameter is a specific demodulation performance parameter value determined as required. For example, when the demodulation performance parameter is an FER, the target FER may be 1% or another value determined as required.

Step 102: Obtain a current radio environment state parameter.
Step 103: Search the mapping relation between the radio environment state parameter and the power offset, and obtain the power offset corresponding to the current radio environment state parameter.
Step 104: Report the obtained power offset to the BS.

In the foregoing embodiment, the MS obtains a power offset according to its own actual conditions and reports the power offset to the BS directly, so the BS does not need to calculate the power offset according to the measurement report, and the power offset used by the BS is more accurate.

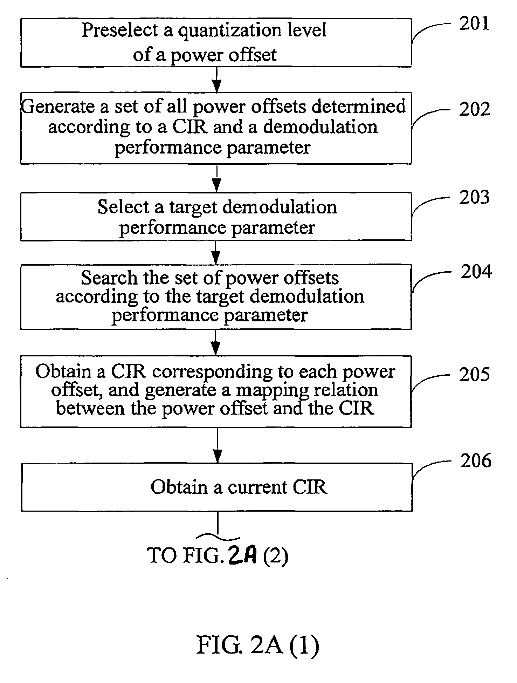

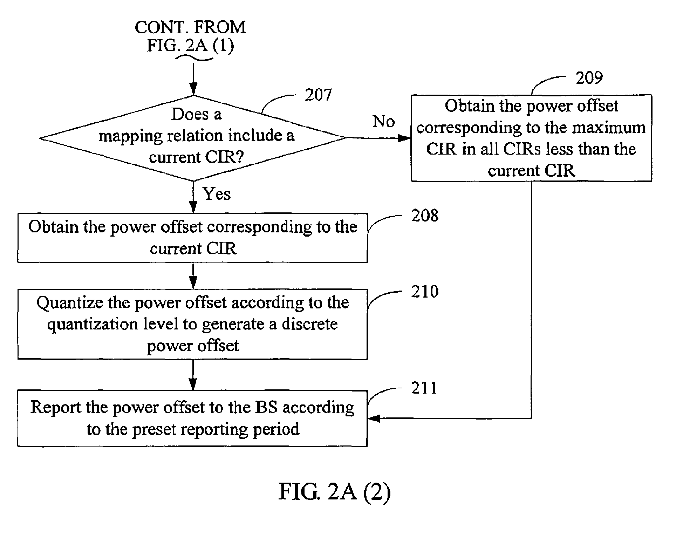

FIG. 2A is a flowchart of a method for reporting a power offset in another embodiment of the present invention. This embodiment describes how the MS reports the power offset in detail. In this embodiment, the radio environment state parameter is a CIR, and the demodulation performance parameter is an FER. The method includes the following steps:

Step 201: Preselect a quantization level of a power offset.

The power offset of the MS falls within a specific selection range such as -10 dB to 10 dB. If binary quantization is used, the selection range has 4 quantization levels; if quaternary quantization is used, the selection range has 16 quantization levels.

Step 202: Generate a set of all power offsets determined according to the Carrier to Interference Ratio and the demodulation performance parameter.

Each MS generates FERs (Frame Error Rate, Frame Error) of different power offsets under different CIRs (Carrier to Interference Ratio) according to its own demodulation capability. The CIR is a parameter that exists objectively for reflecting the radio environment state of the MS, and the FER is a demodulation performance parameter of the MS and varies with CIRs.
In practice, the relations between the three parameters are expressed by a mapping relation curve diagram. In the curve diagram, the x-coordinate is CIR and the y-coordinate is FER. In this coordinate system, a power offset curve consistent with the number of quantization levels is generated.

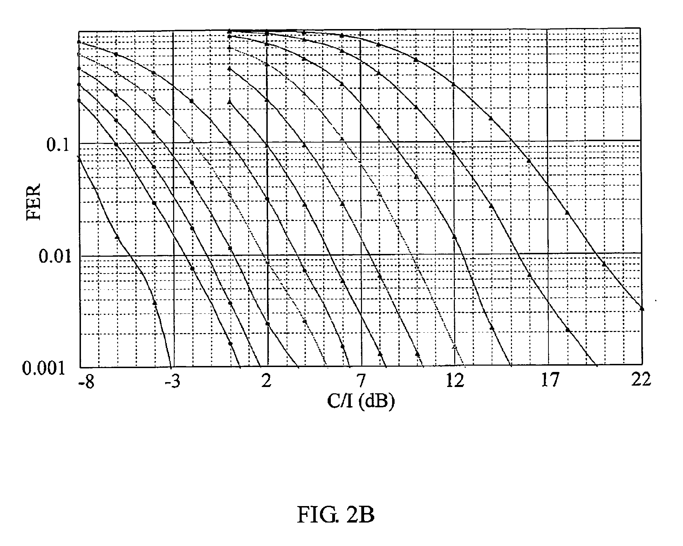

FIG. 2B is a curve diagram of a set of power offsets in an embodiment of the present invention. In the curve diagram, the x-coordinate is CIR and the y-coordinate is FER and 12 power offset curves are generated. The leftmost single curve is a performance curve in the non-pairing circumstance (namely, a single MS works), and other curves correspond to the following power offsets from left rightward: 10 dB, 8 dB, 6 dB, 4 dB, 2 dB, 0 dB, -2 dB, -4 dB, -6 dB, -8 dB, and -10 dB.

Step 203: Select a target demodulation performance parameter.
Step 204: Search the set of power offsets according to a target demodulation performance parameter.
Step 205: Obtain a CIR corresponding to each power offset, and generate a mapping relation between the power offset and the CIR.

Assuming that the desired target demodulation performance parameter FER is 1%, the corresponding y-coordinate value in FIG. 2B is 0.01, and the CIR values corresponding to the FER value "0.01" are searched in the 12 power offset curves. According to search results, the mapping relations between power offsets and CIRs are shown in Table 1:

**Table 1**

| Power offset | single | 10dB | 8dB | 6dB | 4dB | 2dB | 0dB | -2dB | -4dB | -6dB | -8dB | -10dB |
|---|---|---|---|---|---|---|---|---|---|---|---|---|
| CIR (dB) | -5 | -2 | -1 | 0.5 | 2 | 4 | 5.5 | 7.5 | 10 | 12.5 | 15.5 | 19.5 |

Step 206: Obtain a current CIR.

For each burst (burst) on the MS, the CIR of the burst can be calculated on the basis of measurement. The CIR in a period may be obtained by filtering of the CIR of every burst.

Step 207: Search the mapping relations for the current CIR. If the current CIR is included in the mapping relations, the procedure proceeds to step 208; otherwise, the procedure proceeds to step 209.
Step 208: Obtain the power offset corresponding to the current CIR, and perform step 210.

Assuming that the current CIR is 2 dB, Table 1 shows that the power offset corresponding to the CIR of 2 dB is 4 dB.

Step 209: Obtain the power offset corresponding to the maximum CIR in all CIRs less than the current CIR.

Assuming that the current CIR is 5 dB, because no CIR of 5 dB exists in Table 1, the maximum CIR value among all CIR values less than 5 dB is found to be 4 dB, and the power offset corresponding to the CIR of 4 dB is 2 dB.

Step 210: Quantize the power offset according to the quantization level to generate a discrete power offset.

Assuming that the finally obtained power offset is 2 dB, the MS does not report this value directly, but converts the 2 dB into a discrete value according to the preset quantization level.
Assuming that four quantization levels exist, the quantization process is: The four quantization levels are identified by discrete values "00", "01", "10", and "11" respectively; corresponding to the four quantization levels, the power offsets in the set of all power offsets are divided into four equal ranges, and the power offsets in each range are represented by a discrete value, for example, -10 dB to -5 dB is represented by a discrete value "00", -5 dB to 0 dB is represented by a discrete value "01", 0 dB to 5 dB is represented by a discrete value "10", and 5 dB to 10 dB is represented by a discrete value "11".

Step 211: Report the power offset to the BS according to a preset reporting period.

The power offsets may be reported according to the preset period. In the prior art, the reporting period of measurement reports is 480 ms. In this embodiment, the reporting period of power offsets may be the reporting period of Traffic Channel (TCH) frames or its multiples, namely, 20 ms or 40 ms; or may be the reporting period of Slow Associated Control Channel (SACCH) frames or its multiples, namely, 120 ms. A shorter reporting period makes the BS know the power offset change of the MS quickly and make adjustment in real time according to the change.
The foregoing embodiment shows a process of reporting a power offset when the radio environment state parameter is a CIR and the demodulation performance parameter is an FER. The process is similar to a process in the scenario that the radio environment state parameter is an SNR and the demodulation performance parameter is a BER. In the foregoing embodiment, the MS obtains the power offset according to its own actual conditions and reports the power offset to the BS directly. Therefore, the BS does not need to calculate the power offset according to the measurement report, and the power offset used by the BS is more accurate.
Corresponding to the method for reporting a power offset, a method for sending a modulated signal according to the power offset is put forward in the present invention, where the modulated signal is sent after a Base Station Subsystem (BSS) receives the power offset reported by the MS.

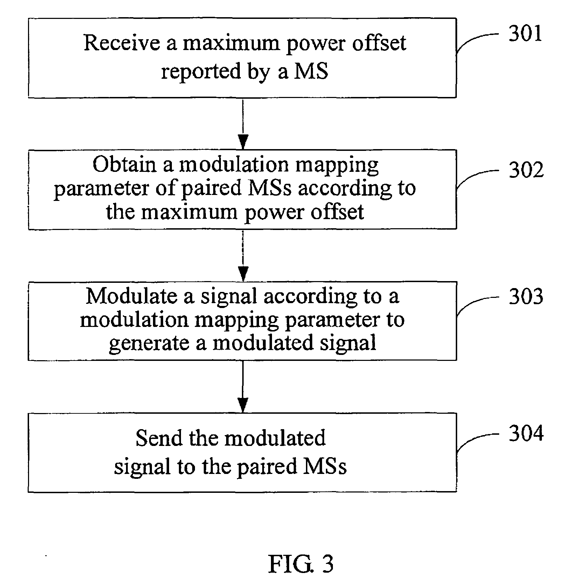

FIG. 3 is a flowchart of a method for sending modulated signals in an embodiment of the present invention. The method includes the following steps:

Step 301: Receive a maximum power offset reported by a MS.
Step 302: Obtain a modulation mapping parameter of paired MSs according to the maximum power offset.

If the MSs that reports the maximum power offset is not paired, proper MSs are selected to pair with each other according to the reported value, and then the final power offset is determined according to the maximum power offset reported by the paired MSs, and a modulation mapping parameter is calculated. If the MS that reports the maximum power offset is already paired, a final power offset parameter is determined directly according to the maximum power offset reported by the paired MSs, and the modulation mapping parameter is calculated.

Step 303: Modulate a signal according to the modulation mapping parameter to generate a modulated signal.
Step 304: Send the modulated signal to the paired MSs.

In the foregoing embodiment, because the power offset used by the BS is not calculated according to the measurement report of the MS, but is reported by the MS directly, the power offset used by the BS is more accurate.

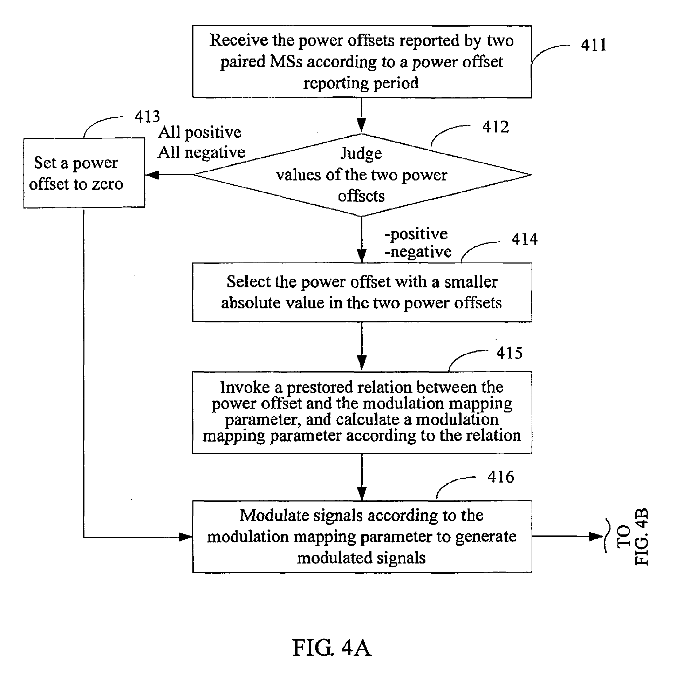

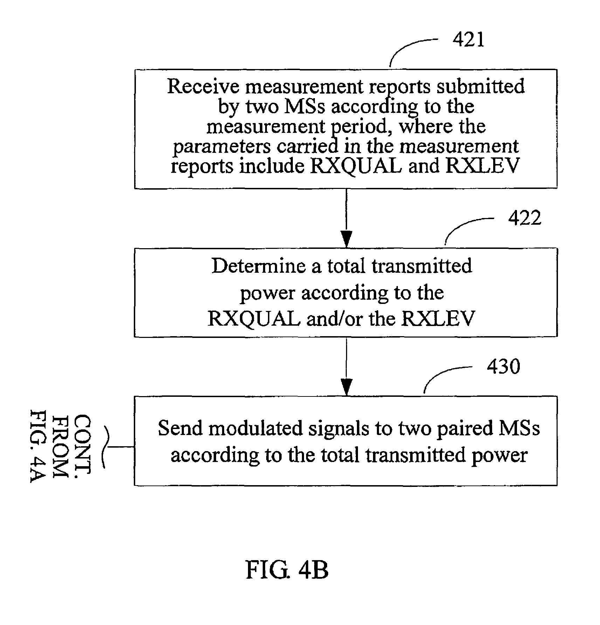

FIG. 4 is a flowchart of a method for sending modulated signals in another embodiment of the present invention. This embodiment provides a detailed process of sending modulated signals to two paired MSs. The process includes the following steps:

Step 411: Receive the power offsets reported by two paired MSs according to a power offset reporting period.

Step 412: Judge whether the values of the two power offsets are all positive or all negative. If so, proceed to step 413; if not, proceed to step 414.

Step 413: Set the power offset to zero, and perform step 415.

For example, if the power offsets reported by the two MSs are 5 dB and 3 dB respectively, the SCPIR is set to 0 dB, namely, the same transmitted power is applied to the paired MSs.

Step 414: Select the power offset with a smaller absolute value in the two power offsets.

If one of the power offset values reported by the two MSs is positive and the other is negative, the power offset closer to 0 dB is selected for deciding the current $\alpha$ value. For example, the power offsets reported by the two MSs are 5 dB and -3 dB respectively, the power offset "3 dB" is selected.

Step 415: Invoke a prestored relation between the power offset and the modulation mapping parameter to calculate the modulation mapping parameter.

The relation between the power offset "SCPIR" and the modulation mapping parameter $\alpha$ is:

$$SCPIR \ (dB) = 10 \log_{10} (\frac{\alpha^2}{2 - \alpha^2}) \, ,$$

where
the SCPIR is a power offset finally selected, according to the two power offsets reported by the two paired MSs, for calculating $\alpha$ paired MSs. The selected power offset is substituted into the formula above to obtain the value of the modulation mapping parameter $\alpha$.

Step 416: Modulate signals according to the modulation mapping parameter to generate modulated signals, and proceed to step 430.

The following step is independent of steps 411-416:

Step 421: Receive measurement reports submitted by two MSs according to a measurement period. The parameters carried in the measurement reports include RXQUAL and RXLEV.

The reporting period of measurement reports is generally 480 ms. In this embodiment, the reporting period of measurement reports is different from the reporting period of power offsets. The measurement reports include RXQUAL and RXLEV used by the BS for calculating the total power.

Step 422: Determine a total transmitted power according to RXQUAL and/or RXLEV, and proceed to step 430.

The BS can determine the total power of transmitted signals according to the measurement reports submitted by the MS. The process of determining the total power is covered in the prior art and not detailed here any further.

Step 430: Send modulated signals to the two paired MSs according to the total transmitted power.

In the foregoing embodiment, the modulation mapping parameter is calculated according to only the power offset reported by the MS. It should be noted that, in practice, the modulation mapping parameter may be calculated according to a combination of the power offset reported by the MS and other parameters (such as RXQUAL in a measurement report). The embodiment of the present invention does not limit to that.

In the foregoing embodiment, because the power offset is obtained by the MS according to its own actual conditions and reported directly instead of being calculated by the BS according to the measurement report, the power offset used by the BS is more accurate.

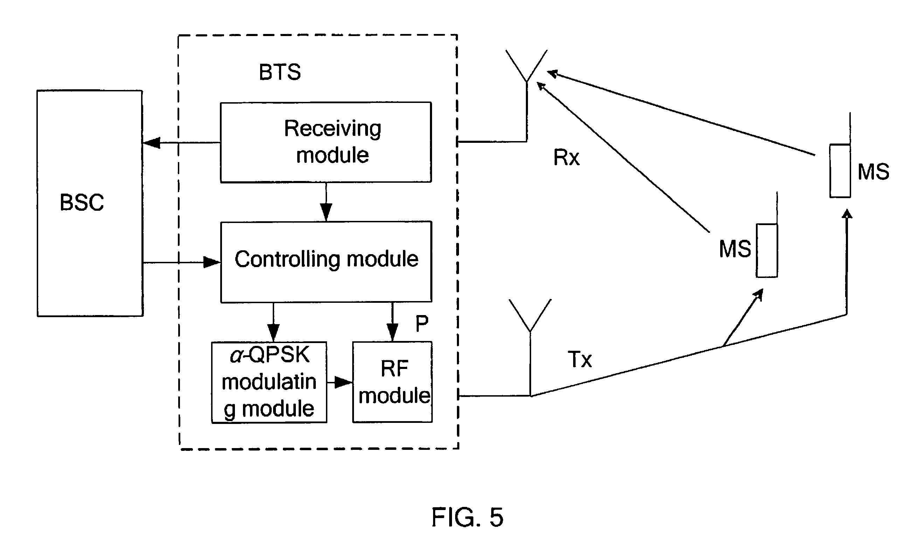

With reference to the method for reporting a power offset and the method for sending modulated signals above, FIG. 5 shows a structure of communication between the BS and the MS.

The BS includes a BSC (Base Station Controller, Base Station Controller) and a BTS (Base Transmitter Stations, Base Transmitter Stations). The BTS includes a receiving module, a controlling module, a α -QPSK modulating module, and a RF (Radio Frequency) module. The receiving module is connected to the BSC and the controlling module respectively, and the controlling module is connected to the BSC, α -QPSK modulating module and RF module respectively. On the BS side, a transmitting antenna transmits signals to two MSs, and a receiving antenna receives signals from the two MSs. It should be noted that, it should be noted that the controlling module in the BTS may also be located in the BSC. The embodiment of the present invention does not limit to that.

The receiving module of the BTS receives the power offsets and measurement reports submitted by the two MSs through the receiving antenna, then the receiving module sends the power offsets to the controlling module, and sends the measurement reports to the BSC. The controlling module selects a proper power offset and calculates the α value. Moreover, the controlling module receives the total power (P) determined by the BSC, sends the α value to the α -QPSK modulating module, and sends the total power (P) to the RF module. The α -QPSK modulating module modulates transmitted signals according to the α value, and sends the modulated signal to the RF module. The RF module transmits the modulated signal through the transmitting antenna according to the total power (P), and the modulated signal received by an MS.

Corresponding to the method for reporting a power offset and the method for sending modulated signals above, an embodiment of an MS and an embodiment of a BS are provided in the present invention.

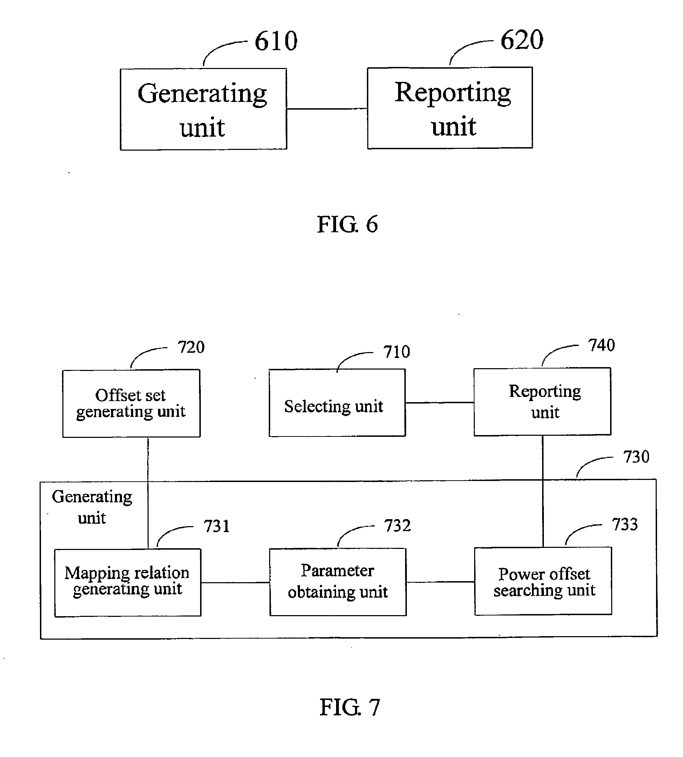

As shown in FIG. 6, the MS includes:

a generating unit 610, adapted to generate a power offset according to a radio environment state parameter and a demodulation performance parameter of the MS; and a reporting unit 620, adapted to report the power offset to a BS.

FIG. 7 is a block diagram of an MS in another embodiment of the present invention. The MS includes: a selecting unit 710, an offset set generating unit 720, a generating unit 730, and a reporting unit 740.

The selecting unit 710 is adapted to preselect a quantization level of power offsets.

The offset set generating unit 720 is adapted to generate a set of all power offsets determined according to the radio environment state parameter and the demodulation performance parameter, wherein the radio environment state parameter includes a CIR or an SNR.

The generating unit 730 includes: a mapping relation generating unit 731, adapted to generate a mapping relation between the radio environment state parameter and the power offset according to a target demodulation performance parameter; a parameter obtaining unit 732, adapted to obtain the current radio environment state parameter; and a power offset searching unit 733, adapted to search the mapping relation to obtain the power offset corresponding to the current radio environment state parameter.

The reporting unit 740 is adapted to report the power offset to a BS.

Specifically, when the radio environment state is a CIR, the mapping relation generating unit 731 may include (not illustrated in FIG. 7): a target parameter selecting unit, adapted to select a target demodulation performance parameter; a power offset searching unit, adapted to search the set of power offsets according to the target demodulation performance parameter; and a mapping relation obtaining unit, adapted to obtain a CIR corresponding to each power offset, and generate a mapping relation between the power offset and the CIR.

Specifically, the power offset searching unit 733 obtains the power offset corresponding to the current CIR when finding that the mapping relation includes the current CIR; or the power offset searching unit 733 obtains the power offset corresponding to the maximum CIR among all CIRs less than the current CIR when finding that the mapping relation does not include the current CIR.

Specifically, the reporting unit 740 may include (not illustrated in FIG. 7): a power offset quantizing unit, adapted to quantize the power offset according to the quantization level to generate a discrete power offset; and a power offset reporting unit, adapted to submit the discrete power offset to the BS according to the preset reporting period, where the reporting period may be the reporting period of TCH frames or the reporting period of SACCH frames.

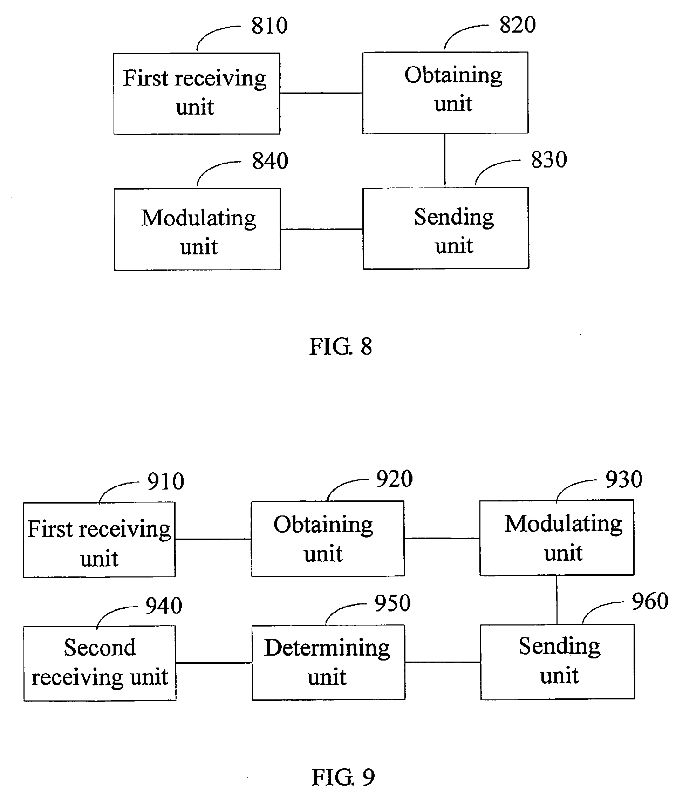

As shown in FIG. 8, a BS provided in an embodiment of the present invention includes: a first receiving unit 810, an obtaining unit 820, a modulating unit 830, and a sending unit 840.

The first receiving unit 810 is adapted to receive maximum power offsets reported by MSs; the obtaining unit 820 is adapted to obtain a modulation mapping parameter of a paired MSs according to the maximum power offsets; the modulating unit 830 is adapted to modulate a signal according to the modulation mapping parameter to generate a modulated signal; and the sending unit 840 is adapted to send the modulated signal to the paired MSs according to a total transmitted power.

As shown in FIG. 9, a BS provided in another embodiment of the present invention includes: a first receiving unit 910, an obtaining unit 920, a modulating unit 930, a second receiving unit 940, a determining unit 950, and a sending unit 960.

The first receiving unit 910 is adapted to receive a maximum power offset reported by two paired MSs; the obtaining unit 920 is adapted to obtain a modulation mapping parameter of a paired MSs according to the maximum power offsets; the modulating unit 930 is adapted to modulate signals according to the modulation mapping parameter to generate modulated signals; the second receiving unit 940 is adapted to receive measurement reports submitted by the two MSs according to the measurement period, where parameters carried in the measurement reports include RXQUAL and RXLEV; the determining unit 950 is adapted to determine the total transmitted power according to RXQUAL and/or RXLEV; and the sending unit 960 is adapted to send the modulated signal to the paired MSs according to a total transmitted power.

Specifically, the obtaining unit 920 may include (not illustrated in FIG. 9): a pairing unit, adapted to select MSs among the MSs that report the maximum power offset when the MSs are unpaired, and pair the MSs to obtain paired MSs; and a calculating unit, adapted to obtain an input power offset according to the two power offsets of the paired MSs, invoke the prestored relation between the power offset and the modulation mapping parameter, and calculate the modulation mapping parameter according to the relation and the input power offset.

In the embodiment above, a power offset is generated according to the radio environment state parameter and demodulation performance parameter of the MS, and is reported to the BS. Because the power offset is obtained by the MS according to its own actual conditions and reported directly instead of being calculated by the BS according to the measurement report, the power offset used by the BS is more accurate.

Those skilled in the art are clearly aware that the present invention may be implemented through software in addition to a necessary universal hardware platform. Therefore, the essence or novelty of the technical solution of the present invention may be embodied in a software product. The software product may be stored in storage media such as ROM/RAM, magnetic disk, or CD-ROM, and incorporates several instructions that make a computer device (for example, personal computer, server, or network device) execute the method specified in any embodiment of the present invention or part of the embodiment.

The above descriptions are merely preferred embodiments of the present invention, but are not intended to limit the scope of the present invention. Any modifications, variations or replacement that can be easily derived by those skilled in the art without departing from the scope of the invention shall fall within the protection scope of the present invention.

## Claims

1. A power offset reporting method for Multi-User Reusing One Slot, MUROS, **characterized by** comprising:

    generating (101), according to a target demodulation performance parameter, a mapping relation between a radio environment state parameter and a power offset;
    obtaining(102) a current radio environment state parameter, and searching (103) the mapping relation to obtain a power offset corresponding to the current radio environment state parameter;
    reporting (104) the power offset to a Base Station, BS;
    receiving, a modulated signal from the base station, wherein the modulated signal is modulated by the base station according to power offsets respectively reported by paired Mobile Stations, MSs; and
    wherein the paired MSs work on the same resource and the method is performed by one of the paired MSs.

2. The method according to claim 1, wherein the method further comprises: generating a set of all power offsets determined according to a radio environment state parameter and a demodulation performance parameter;
    wherein the radio environment state parameter comprises a Carrier-to-Interference Ratio, CIR, or a Signal-to-Noise Ratio, SNR.

3. The method according to claim 2, wherein when the radio environment state parameter is CIR, the generating the mapping relation between the radio environment state parameter and the power offset according to the target demodulation performance parameter comprises:

    selecting (203) a target demodulation performance parameter;
    searching (204) the set of all power offsets according to the target demodulation performance parameter; and
    obtaining a CIR corresponding to each power offset, and generating(205) the mapping relation between the power offset and the CIR.

4. The method according to claim 3, wherein the searching the mapping relation to obtain a power offset corresponding to the current radio environment state parameter comprises:

searching (207) the mapping relation to obtain (208) the power offset corresponding to a current CIR when finding that the mapping relation comprises the current CIR;
obtaining (209) a power offset corresponding to a maximum CIR among all CIRs less than the current CIR when finding that the mapping relation does not comprise the current CIR.

5. The method according to any one of claim 1 to claim 4, wherein
the method further comprises:

preselecting (201) a quantization level of a power offset;
the reporting the power offset to the BS comprises:

quantizing (210) the power offset according to the quantization level to generate a discrete power offset; and
reporting (211) the discrete power offset to the BS according to a preset reporting period;
wherein the reporting period comprises a reporting period of Traffic Channel, TCH, frames or a multiple of it; or, a reporting period of Slow Associated Control Channel, SACCH, frames or a multiple of it.

6. A modulated signal sending method for Multi-User Reusing One Slot, MUROS, the method being performed by a base station and **characterized by** comprising:

receiving (301) power offsets which are respectively reported by paired Mobile Stations, MSs, wherein the paired MSs work on the same resource;
obtaining (302) a modulation mapping parameter of the paired MSs according to the power offsets;
modulating (303) a signal according to the modulation mapping parameter to generate a modulated signal; and
sending (304) the modulated signal to the paired MSs.

7. The method according to claim 6, wherein the modulated signal is sent to the paired MSs according to a total transmitted power, and wherein before sending the modulated signal to the paired MSs according to the total transmitted power, the method further comprises:

receiving (421) measurement reports submitted by the paired MSs according to a measurement period, wherein parameters carried in the measurement reports comprise Receiving Quality, RXQUAL, and Receiving Level, RXLEV; and
determining(422) the total transmitted power according to the RXQUAL and/or the RXLEV

8. A Mobile Station, MS, which supports Multi-User Reusing One Slot, **characterized by** comprising:

a generating unit (610, 730);
a reporting unit (620, 740), configured to report a power offset to a Base Station, BS; and
a receiving unit, configured to receive a modulated signal from the base station, wherein the modulated signal is modulated by the base station according to the power offset reported by the mobile station and another power offset reported by another mobile station which works on the same resource with the mobile station;
wherein the generating unit (610, 730) comprises:

a mapping relation generating unit (731), configured to generate a mapping relation between a radio environment state parameter and a power offset according to a target demodulation performance parameter;
a parameter obtaining unit (732), configured to obtain a current radio environment state parameter; and
a power offset searching unit (733), configured to search the mapping relation to obtain the power offset reported to the base station corresponding to the current radio environment state parameter.

9. The MS according to claim 8, further comprising:

an offset set generating unit (720), configured to generate a set of all power offsets determined according to a radio environment state parameter and a demodulation performance parameter wherein the radio environment state parameter comprises a Carrier-to-Interference Ratio ,CIR, or a Signal-to-Noise Ratio, SNR.

**10.** The MS according to claim 9, wherein: when the radio environment state parameters are CIRs, the mapping relation generating unit (731) comprises:

a target parameter selecting unit, configured to select a target demodulation performance parameter;
a power offset searching unit, configured to search the set of power offsets according to the target demodulation performance parameter; and
a mapping relation obtaining unit, configured to obtain a CIR corresponding to each power offset, and generate a mapping relation between the power offset and the CIR.

**11.** The MS according to claim 8, further comprising: a selecting unit (710), configured to preselect a quantization level of a power offset;
wherein the reporting unit (740) comprises:

a power offset quantizing unit, configured to quantize the power offset according to the quantization level to generate a discrete power offset; and
a power offset reporting unit, configured to submit the discrete power offset to the BS according to a preset reporting period, wherein the reporting period may be a reporting period of Traffic Channel, TCH, frames or a reporting period of Slow Associated Control Channel, SACCH, frames.

**12.** A Base Station, BS, which supports Multi-User Reusing One Slot, **characterized by** comprising:

a first receiving unit (810), configured to receive power offsets which are respectively reported by paired Mobile Station, MSs, wherein the paired MSs work on the same resource;
an obtaining unit (820), configured to obtain a modulation mapping parameter of the paired MSs according to the power offsets;
a modulating unit (830), configured to modulate a signal according to the modulation mapping parameter to generate a modulated signal; and
a sending unit (840), configured to send the modulated signal to the paired MSs.

**13.** The BS according to claim 12, further comprising:

a second receiving unit (940), configured to receive measurement reports submitted by the paired MSs according to a measurement period, wherein parameters carried in the measurement reports comprise Receiving Quality (RXQUAL) and Receiving Level (RXLEV); and
a determining unit (950), configured to determine a total transmitted power according to the RXQUAL and/or the RXLEV.

**Patentansprüche**

**1.** Leistungsoffset-Meldeverfahren für Multi-User Reusing One Slot, MUROS, **dadurch gekennzeichnet, dass** es Folgendes umfasst:

Erzeugen (101) einer Abbildungsbeziehung zwischen einem Funkumgebungszustandsparameter und einem Leistungsoffset gemäß einem Ziel-Demodulations-Leistungsfähigkeitsparameter;
Erhalten (102) eines aktuellen Funkumgebungszustandsparameters und Durchsuchen (103) der Abbildungsbeziehung, um ein Leistungsoffset zu erhalten, das dem aktuellen Funkumgebungszustandsparameter entspricht;
Melden (104) des Leistungsoffsets an eine Basisstation, BS;
Empfangen eines modulierten Signals von der Basisstation, wobei das modulierte Signal durch die Basisstation gemäß jeweils durch gepaarte Mobilstationen, MS, gemeldeten Leistungsoffsets moduliert wird; und
wobei die gepaarten MS auf demselben Betriebsmittel arbeiten und das Verfahren durch eine der gepaarten MS durchgeführt wird.

**2.** Verfahren nach Anspruch 1, wobei das Verfahren ferner Folgendes umfasst:

Erzeugen einer Menge aller gemäß einem Funkumgebungszustandsparameter und einem Demodulations-Leistungsfähigkeitsparameter bestimmten Leistungsoffsets;

wobei der Funkumgebungszustandsparameter ein Träger-Störungs-Verhältnis, CIR, oder ein Signal-Rausch-Verhältnis, SNR, umfasst.

3. Verfahren nach Anspruch 2, wobei, wenn der Funkumgebungszustandsparameter CIR ist, das Erzeugen der Abbildungsbeziehung zwischen dem Funkumgebungszustandsparameter und dem Leistungsoffset gemäß dem Ziel-Demodulations-Leistungsfähigkeitsparameter Folgendes umfasst:

Auswählen (203) eines Ziel-Demodulations-Leistungsfähigkeitsparameters;
Durchsuchen (204) der Menge aller Leistungsoffsets gemäß dem Ziel-Demodulations-Leistungsfähigkeitsparameter; und
Erhalten eines CIR entsprechend jedem Leistungsoffset und Erzeugen (205) der Abbildungsbeziehung zwischen dem Leistungsoffset und dem CIR.

4. Verfahren nach Anspruch 3, wobei das Durchsuchen der Abbildungsbeziehung, um ein Leistungsoffset zu erhalten, das dem aktuellen Funkumgebungszustandsparameter entspricht, Folgendes umfasst:

Durchsuchen (207) der Abbildungsbeziehung, um das Leistungsoffset, das einem aktuellen CIR entspricht, zu erhalten (208), wenn gefunden wird, dass die Abbildungsbeziehung das aktuelle CIR umfasst;
Erhalten (209) eines Leistungsoffsets, das einem maximalen CIR unter allen CIR kleiner als dem aktuellen CIR entspricht, wenn gefunden wird, dass die Abbildungsbeziehung das aktuelle CIR nicht umfasst.

5. Verfahren nach einem von Anspruch 1 bis Anspruch 4, wobei das Verfahren ferner Folgendes umfasst:

Vorauswählen (201) eines Quantisierungswerts eines Leistungsoffsets;
das Melden des Leistungsoffsets an die BS Folgendes umfasst:

Quantisieren (210) des Leistungsoffsets gemäß dem Quantisierungswert, um ein diskretes Leistungsoffset zu erzeugen; und
Melden (211) des diskreten Leistungsoffsets an die BS gemäß einer voreingestellten Meldeperiode;
wobei die Meldeperiode eine Meldeperiode von Rahmen des Traffic Channel, TCH, oder ein Vielfaches davon; oder eine Meldeperiode von Rahmen des Slow Associated Control Channel, SACCH, oder ein Vielfaches davon umfasst.

6. Verfahren zum Senden eines modulierten Signals für Multi-User Reusing One Slot, MUROS, wobei das Verfahren durch eine Basisstation durchgeführt wird und **dadurch gekennzeichnet ist, dass** es Folgendes umfasst:

Empfangen (301) von Leistungsoffsets, die jeweils von gepaarten Mobilstationen, MS, gemeldet werden, wobei die gepaarten MS auf demselben Betriebsmittel arbeiten;
Erhalten (302) eines Modulationsabbildungsparameters der gepaarten MS gemäß den Leistungsoffsets;
Modulieren (303) eines Signals gemäß dem Modulationsabbildungsparameter, um ein moduliertes Signal zu erzeugen; und
Senden (304) des modulierten Signals zu den gepaarten MS.

7. Verfahren nach Anspruch 6, wobei das modulierte Signal gemäß einer Gesamtsendeleistung zu den gepaarten MS gesendet wird und wobei das Verfahren vor dem Senden des modulierten Signals zu den gepaarten MS gemäß der Gesamtsendeleistung ferner Folgendes umfasst:

Empfangen (421) von Messungsmeldungen, die durch die gepaarten MS gemäß einer Messungsperiode eingesendet werden, wobei in den Messungsmeldungen geführte Parameter Empfangsqualität, RXQUAL, und Empfangspegel, RXLEV, umfassen; und
Bestimmen (422) der Gesamtsendeleistung gemäß der RXQUAL und/oder dem RXLEV.

8. Mobilstation, MS, die Multi-User Reusing One Slot unterstützt, **dadurch gekennzeichnet, dass** sie Folgendes umfasst:

eine Erzeugungseinheit (610, 730);
eine Meldeeinheit (620, 740), die dafür ausgelegt ist, ein Leistungsoffset an eine Basisstation, BS, zu melden; und
eine Empfangseinheit, die dafür ausgelegt ist, ein moduliertes Signal von der Basisstation zu empfangen, wobei das modulierte Signal durch die Basisstation gemäß dem durch die Mobilstation gemeldeten Leistungsoffset und einem anderen durch eine andere Mobilstation, die auf demselben Betriebsmittel wie die Mobilstation arbeitet, gemeldeten Leistungsoffset moduliert wird;
wobei die Erzeugungseinheit (610, 730) Folgendes umfasst:

eine Abbildungsbeziehungs-Erzeugungseinheit (731), die dafür ausgelegt ist, eine Abbildungsbeziehung zwischen einem Funkumgebungszustandsparameter und einem Leistungsoffset gemäß einem Ziel-Demodulations-Leistungsfähigkeitsparameter zu erzeugen;
eine Parametererhalteeinheit (732), die dafür ausgelegt ist, einen aktuellen Funkumgebungszustandsparameter zu erhalten; und
eine Leistungsoffset-Sucheinheit (733), die dafür ausgelegt ist, die Abbildungsbeziehung zu durchsuchen, um das an die Basisstation gemeldete Leistungsoffset zu erhalten, das dem aktuellen Funkumgebungszustandsparameter entspricht.

9. MS nach Anspruch 8, ferner umfassend:

eine Offset-Mengenerzeugungseinheit (720), die dafür ausgelegt ist, eine Menge von allen gemäß einem Funkumgebungszustandsparameter und einem Demodulationsleistungsfähigkeitsparameter bestimmten Leistungsoffsets zu erzeugen, wobei der Funkumgebungszustandsparameter ein Träger-Störungs-Verhältnis, CIR, oder ein Signal-Rausch-Verhältnis, SNR, umfasst.

10. MS nach Anspruch 9, wobei, wenn die Funkumgebungszustandsparameter CIR sind, die Abbildungsbeziehungs-Erzeugungseinheit (731) Folgendes umfasst:

eine Zielparameter-Auswahleinheit, die dafür ausgelegt ist, einen Ziel-Demodulations-Leistungsfähigkeitsparameter auszuwählen;
eine Leistungsoffset-Sucheinheit, die dafür ausgelegt ist, die Menge von Leistungsoffsets gemäß dem Ziel-Demodulations-Leistungsfähigkeitsparameter zu durchsuchen; und
eine Abbildungsbeziehungs-Erhalteeinheit, die dafür ausgelegt ist, ein CIR entsprechend jedem Leistungsoffset zu erhalten und eine Abbildungsbeziehung zwischen dem Leistungsoffset und dem CIR zu erzeugen.

11. MS nach Anspruch 8, die ferner eine Auswahleinheit (710) umfasst, die dafür ausgelegt ist, einen Quantisierungswert eines Leistungsoffsets vorauszuwählen; wobei die Meldeeinheit (740) Folgendes umfasst:

eine Leistungsoffset-Quantisierungseinheit, die dafür ausgelegt ist, das Leistungsoffset gemäß dem Quantisierungswert zu quantisieren, um ein diskretes Leistungsoffset zu erzeugen; und
eine Leistungsoffset-Meldeeinheit, die dafür ausgelegt ist, das diskrete Leistungsoffset gemäß einer voreingestellten Meldeperiode zu der BS einzusenden, wobei die Meldeperiode eine Meldeperiode von Rahmen des Traffic Channel, TCH, oder eine Meldeperiode von Rahmen des Slow Associated Control Channel, SACCH, sein kann.

12. Basisstation BS, die Multi-User Reusing One Slot unterstützt, **dadurch gekennzeichnet, dass** sie Folgendes umfasst:

eine erste Empfangseinheit (810), die dafür ausgelegt ist, Leistungsoffsets zu empfangen, die jeweils von gepaarten Mobilstationen MS gemeldet werden, wobei die gepaarten MS auf demselben Betriebsmittel arbeiten;
eine Erhalteeinheit (820), die dafür ausgelegt ist, einen Modulationsabbildungsparameter der gepaarten MS gemäß den Leistungsoffsets zu erhalten;
eine Modulationseinheit (830), die dafür ausgelegt ist, ein Signal gemäß dem Modulationsabbildungsparameter zu modulieren, um ein moduliertes Signal zu erzeugen; und
eine Sendeeinheit (840), die dafür ausgelegt ist, das modulierte Signal zu den gepaarten MS zu senden.

13. BS nach Anspruch 12, ferner umfassend:

eine zweite Empfangseinheit (940), die dafür ausgelegt ist, Messungsmeldungen zu empfangen, die durch gepaarte MS gemäß einer Messungsperiode eingesendet werden, wobei in den Messungsmeldungen geführte Parameter Empfangsqualität (RXQUAL) und Empfangspegel (RXLEV) umfassen; und
eine Bestimmungseinheit (950), die dafür ausgelegt ist, eine Gesamtsendeleistung gemäß der RXQUAL und/oder dem RXLEV zu bestimmen.

**Revendications**

**1.** Procédé de communication de décalage en puissance pour des utilisateurs multiples réutilisant une tranche de temps, MUROS, **caractérisé en ce qu'**il comprend :

la génération (101), en fonction d'un paramètre de performances de démodulation cible, d'une relation de mappage entre un paramètre d'état d'environnement radio et un décalage en puissance,
l'obtention (102) du paramètre actuel d'état d'environnement radio, et la recherche (103) de la relation de mappage afin d'obtenir un décalage en puissance correspondant au paramètre actuel d'état d'environnement radio,
la communication (104) du décalage en puissance à une station de base, BS,
la réception d'un signal modulé provenant de la station de base, le signal modulé étant modulé par la station de base en fonction de décalages en puissance communiqués respectivement par des stations mobiles, MS, appairées et
dans lequel les stations mobiles MS appairées fonctionnent sur la même ressource, et le procédé est exécuté par l'une des stations mobiles MS appairées.

**2.** Procédé selon la revendication 1, dans lequel le procédé comprend en outre : la génération d'un ensemble comprenant la totalité des décalages en puissance déterminés en fonction d'un paramètre d'état d'environnement radio et d'un paramètre de performances de démodulation,
dans lequel le paramètre d'état d'environnement radio comprend un rapport porteuse sur interférences, CIR, ou un rapport signal sur bruit, SNR.

**3.** Procédé selon la revendication 2, dans lequel, quand le paramètre d'état d'environnement radio est un rapport CIR, la génération de la relation de mappage entre le paramètre d'état d'environnement radio et le décalage en puissance en fonction du paramètre de performances de démodulation cible comprend :

la sélection (203) d'un paramètre de performances de démodulation cible,
la recherche (204) de l'ensemble comprenant la totalité des décalages en puissance en fonction du paramètre de performances de démodulation cible, et
l'obtention d'un rapport CIR correspondant à chaque décalage en puissance et la génération (205) de la relation de mappage entre le décalage en puissance et le rapport CIR.

**4.** Procédé selon la revendication 3, dans lequel la recherche de la relation de mappage pour obtenir un décalage en puissance correspondant au paramètre actuel d'état d'environnement radio comprend :

la recherche (207) de la relation de mappage afin d'obtenir (208) le décalage en puissance correspondant au rapport CIR actuel lorsqu'il est trouvé que la relation de mappage comprend le rapport CIR actuel,
l'obtention (209) d'un décalage en puissance correspondant à un rapport CIR maximal parmi tous les rapports CIR inférieurs au rapport CIR actuel lorsqu'il est trouvé que la relation de mappage ne comprend pas le rapport CIR actuel.

**5.** Procédé selon l'une quelconque des revendications 1 à 4, dans lequel le procédé comprend en outre :

la présélection (201) d'un niveau de quantification d'un décalage en puissance,
la communication du décalage en puissance à la station de base BS comprenant :

la quantification (210) du décalage en puissance en fonction du niveau de quantification pour générer un décalage en puissance discret, et
la communication (211) du décalage en puissance discret à la station de base BS en fonction d'un intervalle de temps de communication prédéfini,
dans lequel l'intervalle de temps de communication comprend un intervalle de temps de communication de trames de canal de trafic, TCH, ou l'un de ses multiples, ou
bien un intervalle de temps de communication de trames de canal de commande associé à faible débit, SACCH, ou l'un de ses multiples.

**6.** Procédé d'envoi d'un signal modulé pour des utilisateurs multiples réutilisant une tranche de temps, MUROS, le procédé étant exécuté par une station de base et **caractérisé en ce qu'**il comprend :

la réception (301) de décalages en puissance qui sont respectivement communiqués par des stations mobiles, MS, appairées, les stations mobiles MS appairées fonctionant sur la même ressource,
l'obtention (302) d'un paramètre de mappage de modulation des stations mobiles MS appairées en fonction des décalages en puissance,
la modulation (303) d'un signal en fonction du paramètre de mappage de modulation afin de générer un signal modulé, et
l'envoi (304) du signal modulé aux stations mobiles MS appairées.

**7.** Procédé selon la revendication 6, dans lequel le signal modulé est envoyé aux stations mobiles MS appairées en fonction d'une puissance transmise totale, et dans lequel, avant l'envoi du signal modulé aux stations mobiles MS appairées en fonction de la puissance transmise totale, le procédé comprend en outre :

la réception (421) de rapports de mesure soumis par les stations mobiles MS appairées en fonction d'un intervalle de temps de mesure, les paramètres transportés dans les rapports de mesure comprenant la qualité de réception, RXQUAL, et le niveau de réception, RXLEV, et
la détermination (422) de la puissance transmise totale en fonction de la qualité RXQUAL et/ou du niveau RXLEV.

**8.** Station mobile, MS, qui prend en charge des utilisateurs multiples réutilisant une tranche de temps, **caractérisée en ce qu'**elle comprend :

une unité de génération (610, 730),
une unité de communication (620, 740), configurée pour communiquer un décalage en puissance à une station de base, BS, et
une unité de réception, configurée pour recevoir un signal modulé provenant de la station de base, le signal modulé étant modulé par la station de base en fonction du décalage en puissance communiqué par la station mobile et en fonction d'un autre décalage en puissance communiqué par une autre station mobile qui fonctionne sur la même ressource que la station mobile,
dans laquelle l'unité de génération (610, 730) comprend :

une unité de génération de relation de mappage (731), configurée pour générer une relation de mappage entre un paramètre d'état d'environnement radio et un décalage en puissance en fonction d'un paramètre de performances de démodulation cible,
une unité d'obtention de paramètre (732) configurée pour obtenir un paramètre d'état d'environnement radio actuel, et
une unité de recherche de décalage en puissance (733), configurée pour rechercher la relation de mappage afin d'obtenir le décalage en puissance communiqué à la station de base correspondant au paramètre d'état d'environnement radio actuel.

**9.** Station mobile MS selon la revendication 8, comprenant en outre :

une unité de génération d'ensemble de réglage de décalages (720), configurée pour générer un ensemble comprenant la totalité des décalages en puissance déterminés en fonction d'un paramètre d'état d'environnement radio et d'un paramètre de performances de démodulation dans laquelle le paramètre d'état d'environnement radio comprend un rapport porteuse sur interférences, CIR, ou un rapport signal sur bruit, SNR.

**10.** Station mobile MS selon la revendication 9, dans laquelle, quand les paramètres d'état d'environnement radio sont des rapports CIR, l'unité de génération de relation de mappage (731) comprend :

une unité de sélection de paramètre cible, configurée pour sélectionner un paramètre de performances de démodulation cible,
une unité de recherche de décalages en puissance, configurée pour rechercher l'ensemble comprenant les décalages en puissance en fonction du paramètre de performances de démodulation cible, et
une unité d'obtention de relation de mappage, configurée pour obtenir un rapport CIR correspondant à chaque décalage en puissance et pour générer une relation de mappage entre le décalage en puissance et le rapport CIR.

**11.** Station mobile MS selon la revendication 8, comprenant en outre : une unité de sélection (710), configurée pour présélectionner un niveau de quantification d'un décalage en puissance,
dans laquelle l'unité de communication (740) comprend :

une unité de quantification de décalage en puissance, configurée pour quantifier le décalage en puissance en fonction du niveau de quantification pour générer un décalage en puissance discret, et
une unité de communication de décalage en puissance, configurée pour soumettre le décalage en puissance discret à la station de base BS en fonction d'un intervalle de temps de communication prédéfini, l'intervalle de temps de communication pouvant être un intervalle de temps de communication de trames de canal de trafic, TCH, ou bien un intervalle de temps de communication de trames de canal de commande associé à faible débit, SACCH.

**12.** Station de base, BS, qui prend en charge des utilisateurs multiples réutilisant une tranche de temps, **caractérisée en ce qu'**elle comprend :

une première unité de réception (810), configurée pour recevoir des décalages en puissance qui sont respectivement communiqués par des stations mobiles MS appairées, les stations mobiles MS appairées fonctionnant sur la même ressource,
une unité d'obtention (820), configurée pour obtenir un paramètre de mappage de modulation des stations mobiles MS appairées en fonction des décalages en puissance,
une unité de modulation (830), configurée pour moduler un signal en fonction du paramètre de mappage de modulation afin de générer un signal modulé, et
une unité d'envoi (840), configurée pour envoyer le signal modulé aux stations mobiles MS appairées.

**13.** Station de base BS selon la revendication 12, comprenant en outre :

une seconde unité de réception (940), configurée pour recevoir des rapports de mesure soumis par les stations mobiles MS appairées en fonction d'un intervalle de temps de mesure, les paramètres transportés dans les rapports de mesure comprenant une qualité de réception (RXQUAL) et un niveau de réception (RXLEV), et
une unité de détermination (950), configurée pour déterminer une puissance transmise totale en fonction de la qualité RXQUAL et/ou du niveau RXLEV.

Generate a mapping relation between a
radio environment state parameter and a
power offset according to a target
demodulation performance parameter

— 101

Obtain a current radio environment state
parameter

— 102

Search the mapping relation between the
radio environment state parameter and the
power offset, and obtain the power offset
corresponding to the current radio
environment state parameter

— 103

Report the power offset to a BS

— 104

FIG. 1

```
┌─────────────────────────────────────┐
│      Preselect a quantization level  │  ── 201
│          of a power offset           │
└─────────────────────────────────────┘
                  │
                  ▼
┌─────────────────────────────────────┐
│ Generate a set of all power offsets  │  ── 202
│   determined according to a CIR and  │
│   a demodulation performance         │
│   parameter                          │
└─────────────────────────────────────┘
                  │
                  ▼
┌─────────────────────────────────────┐
│      Select a target demodulation    │  ── 203
│         performance parameter        │
└─────────────────────────────────────┘
                  │
                  ▼
┌─────────────────────────────────────┐
│        Search the set of power       │  ── 204
│     offsets according to the target  │
│   demodulation performance parameter │
└─────────────────────────────────────┘
                  │
                  ▼
┌─────────────────────────────────────┐
│  Obtain a CIR corresponding to each  │  ── 205
│  power offset, and generate a        │
│  mapping relation between the power  │
│  offset and the CIR                  │
└─────────────────────────────────────┘
                  │
                  ▼
┌─────────────────────────────────────┐
│         Obtain a current CIR         │  ── 206
└─────────────────────────────────────┘
                  │
              ╰───╯

      TO FIG. 2A (2)


            FIG. 2A (1)
```

CONT. FROM
FIG. 2A (1)

Does a
mapping relation include a
current CIR? — 207

No

Obtain the power offset
corresponding to the maximum
CIR in all CIRs less than the
current CIR — 209

Yes

Obtain the power offset corresponding to the
current CIR — 208

Quantize the power offset according to the
quantization level to generate a discrete
power offset — 210

Report the power offset to the BS according
to the preset reporting period — 211

FIG. 2A (2)

FIG. 2B

Receive a maximum power offset
reported by a MS — 301

Obtain a modulation mapping
parameter of paired MSs according to
the maximum power offset — 302

Modulate a signal according to a
modulation mapping parameter to
generate a modulated signal — 303

Send the modulated
signal to the paired MSs — 304

FIG. 3

Receive the power offsets reported by two paired MSs according to a power offset reporting period — 411

Set a power offset to zero — 413

All positive
All negative

Judge values of the two power offsets — 412

-positive
-negative — 414

Select the power offset with a smaller absolute value in the two power offsets

— 415

Invoke a prestored relation between the power offset and the modulation mapping parameter, and calculate a modulation mapping parameter according to the relation

— 416

Modulate signals according to the modulation mapping parameter to generate modulated signals

TO FIG. 4B

FIG. 4A

421

Receive measurement reports submitted by two MSs according to the measurement period, where the parameters carried in the measurement reports include RXQUAL and RXLEV

422

Determine a total transmitted power according to the RXQUAL and/or the RXLEV

430

CONT.
FROM
FIG. 4A

Send modulated signals to two paired MSs according to the total transmitted power

FIG. 4B

FIG. 5

EP 2 387 277 B1

610

620

Generating
unit

Reporting
unit

FIG. 6

720

710

740

Offset set
generating unit

Selecting unit

Reporting
unit

730

Generating
unit

731

732

733

Mapping relation
generating unit

Parameter
obtaining unit

Power offset
searching unit

FIG. 7

810

First receiving
unit

820

Obtaining
unit

840

Modulating
unit

830

Sending
unit

FIG. 8

910

First receiving
unit

920

Obtaining
unit

930

Modulating
unit

940

Second
receiving unit

950

Determining
unit

960

Sending
unit

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROHANI et al.** *combined AMR mode adaptation and fast power control for GSM phase 2+,* 03 October 2005